# EUROPEAN PATENT SPECIFICATION

(11) **EP 2 788 292 B1**
(45) Date of publication and mention of the grant of the patent: **29.03.2017**
(21) Application number: 12856076.0
(22) Date of filing: 02.11.2012
(51) Int. Cl.: C02F 1/42, G21C 19/307, G21F 9/12, C02F 101/00, G21F 9/06, B01D 15/00, B01D 21/00

(54) **FLUID TREATMENT SYSTEM**
FLÜSSIGKEITSBEHANDLUNGSSYSTEM
SYSTÈME DE TRAITEMENT DE FLUIDE

(30) Priority: 08.12.2011 US 201161568372 P
(43) Date of publication of application: 15.10.2014
(73) Proprietor: Shaw Global Services, LLC, Baton Rouge, LA 70809 (US); Avantech Incorporated, Columbia, SC 29203 (US)
(72) Inventor: FERGUSON, Keith, Weston, MA 02493 (US); BARON, Joseph, Melrose, MA 02176 (US); BARKER, Tracy A., Irmo, SC 29063 (US); BEEREDDY, Raja, Irmo, SC 29212 (US)
(74) Representative: HGF Limited
(86) International application number: PCT/US2012/063302
(87) International publication number: WO 2013/085644

(56) References cited:
- WO-A1-2010/122014
- GB-A- 2 270 639
- JP-A- 2000 075 083
- US-A- 3 962 078
- US-A- 4 436 655
- US-A- 4 952 339
- US-A- 5 377 242
- US-A1- 2002 166 293
- US-A1- 2006 235 258
- US-A1- 2009 038 961
- US-A1- 2010 021 859

## Description

### FIELD

The presently disclosed embodiments relate to fluid treatment systems, and in particular, to fluid treatment systems having disposable modules for holding and, subsequently, storing spent treatment medium.

### BACKGROUND

In general, nuclear reactor cores are cooled by circulating a coolant past the reactor core to absorb the heat generated by the nuclear fission process. As the coolant passes around the reactor core, it can get contaminated with highly radioactive isotopes, such as cesium, strontium and other fission products that have escaped the fuel pellets. The degree of contamination directly depends on the integrity of the fuel pellet cladding of the fuel assemblies. After being in contact with the core, the fluid is treated to reduce the highly radioactive contaminants, such that the coolant can be reused or discharged. Current reactor coolant treatment systems function using organic resins in an environment where the radioactive contaminant levels are low and competing non-radioactive ions are not present in significant quantities. Thus, the resulting radiation exposure of the medium during operation or in storage is low and does not cause significant radiation damage of the medium..

A treatment system that is required to function following an accident that results in fuel damage/melt needs to be capable of treating contamination levels several orders of magnitude higher than conventional treatment systems and in some cases needs to address the presence of high concentrations of non-radioactive ions and organic species that would limit the absorption and retention capability of conventional ion exchange materials. Due to the potential of radiation damage and decomposition of conventional ion exchange materials which are organic based, the proposed exchange medium is inorganic in nature and possesses extreme chemical, thermal and radiation resistance. Thus, the proposed treatment process can often be expensive and time consuming depending on the concentration of both the radioactive and the non-radioactive contaminants. Moreover, due to the highly radioactive nature of the contaminants, extreme care must be taken to contain the contaminants securely, while avoiding exposing personnel to dangerous levels of radiation during all phases of system operation and storage. In addition, there is still a need in the art for an "easy to use" nuclear reactor core coolant treatment system in an highly radioactive environment.

JP 2000 075083A provides a cover gas system for a fast breeder reactor. The device comprises a mist separator installed in a reactor vessel. The mist separator is cooled by the cooled cover gas from a cover gas system and sodium mist in the cover gas region is condensed by a cooling fan and the like exposed into the cover gas region, dropped and returned to the reactor vessel. Coagulation of the condensed sodium mist adhering to the mist separator is suppressed by the heat in the reactor vessel, a self-recovery function of the mist separator is promoted, and blocking accidents of the cover gas system are automatically eliminated so that the reliability for the cover gas system is improved.

US 4,436,655A provides a method and apparatus for removing and disposing of contaminants from a contaminated fluid. The apparatus makes use of an expendable collection receptacle which is encapsulated in an inert protective matrix except for inlet and outlet ports and which is capable of removing and retaining contamination from the liquid when passed therethrough. The removed and retained contamination is subsequently encapsulated in a solid material within the receptacle by introducing a settable fluid material into the receptacle. The inlet and outlet ports are then encapsulated in a solid inert matrix so that the receptacle can be disposed of.

GB 2270639A describes a vent filter assembly. This assembly is sealed into an aperture in the wall of a container for radioactive waste, to prevent pressure build-up, and comprises a cup-like housing with a lid enclosing a filter of HEPA-rated porous metal sheet, rendered hydropholic. The filter may be cup-shaped and welded to the housing or may be flat or pleated and annular. The housing has an opening, and the lid is supported off the housing lip by arms, to allow flow of gas through the assembly.

### SUMMARY

The present disclosure provides a fluid treatment system (FTS) for processing fluids contaminated with highly radioactive elements, such as a nuclear reactor coolant or waste stream resulting from normal plant operations or following an accident. Some of unique features of the FTS of the present disclosure include, without limitation, a) shielded modules for holding treatment medium that are individually shielded and disposable which minimizes the exposure of personnel to radiation during operation, removal or storage of the shielded modules; b) the potential for minimizing operational malfunction and need for maintenance in a highly radioactive environment due to the reduction of medium transfer operations; c) shielding of the shielded modules holding the treatment medium via an annular external shield that contains lead, tungsten or steel shot to eliminate the potential of gaps in the shielding medium by allowing the shot to flow around piping routed through the shield; d) utilization of "fine" sand or other fine granular material to fill the interstitial spaces in the shot to provide stabilization of the shield material to counteract temperature softening or compressive effects; e) no generation of a secondary contaminated waste stream that requires further processing; f) removal of hydrogen during the initial phases of storage when hydrogen generation is an issue, by the inclusion of vents at the top of the vessel; and g) means for passive removal of decay heat when the ion-exchange containers are placed into interim or long term storage.

The FTS of the present disclosure can have a simplified design intended to minimize moving parts to reduce probability of malfunctions and need for maintenance in a high radiation environment. Design concepts integrated into the design of the FTS of the present disclosure can include selective ion exchange focused on the removal of highly radioactive contaminants such as cesium versus non radioactive contaminants; shielding of ion exchange and filter medium containers with an annular shield; single-use of each container (retirement from service based on operational characteristics such as ion-exchange medium depletion, radioactivity loading, etc.); choice of selective ion exchange medium which a) does not experience damage due to radiation or high temperature and is not combustible during operation or storage or both, b) allows use in either a high or low concentration non-radioactive salt solution with the removal of radioactive contaminants; and c) has a thermal conductivity that allows passive decay heat removal when the ion-exchange containers are placed into interim storage.

The FTS of the present disclosure can include shielded disposable modules. The inventive design can eliminate subsystems (such as sluicing, backwashing, sludge management etc.), and reduce the number of components that need to be shielded, maintained and managed (e.g., pumps, valves, piping, tankage, including instrumentation and controls associated with sluicing of ion-exchange medium).

In some aspects, there is provided a module for treatment of a fluid that includes an inner pressure vessel designed to accommodate a treatment medium, the treatment medium being selected to remove radioactive contaminants from a fluid passed through the pressure vessel, wherein the treatment medium is an ion exchange medium. The module also includes an outer shield vessel surrounding the pressure vessel and designed to attenuate the radiation from the radioactive contaminants accumulated by the treatment medium in the pressure vessel and to facilitate ease of handling and storage of the module together with the contaminated treatment medium. Furthermore, the module includes an annular region between the pressure vessel and the shield vessel for passing a cooling medium therethrough to remove decay heat from the radioactive contaminants accumulated in the pressure vessel.

In some aspects, there is provided a system for treatment of a fluid that includes a plurality of modules in fluid communication with one another to allow flow of a contaminated fluid through the modules to remove radioactive contaminants from the contaminated fluid. Each module of the system includes an inner pressure vessel designed to accommodate a treatment medium, the treatment medium being selected to remove radioactive contaminants from the contaminated fluid passed through the pressure vessel, wherein the treatment medium is an ion exchange medium; an outer shield vessel surrounding the pressure vessel and designed to attenuate the radiation from the radioactive contaminants accumulated by the treatment medium in the pressure vessel and facilitate ease of handling and storage of the module together with the contaminated treatment medium; and an annular region between the pressure vessel and the shield vessel for passing a cooling medium therethrough to remove decay heat from the radioactive contaminants accumulated in the pressure vessel.

In some aspects, there is provided a method for treatment of radioactively contaminated fluid that includes directing a flow of a radioactively contaminated fluid through at least one module having an inner pressure vessel for accommodating a treatment medium comprising an ion exchange medium, an outer shield vessel surrounding the inner pressure vessel and an annular region between the pressure vessel for passing a cooling medium therethrough to remove decay heat from the radioactive contaminants accumulated in the inner pressure vessel. Radioactive contaminants may be captured from the contaminated fluid by the treatment medium accommodated in the inner pressure vessel. When it be determined that the treatment medium in a module of the at least one module needs to be replaced, the treatment module can be removed from the flow and stored in an area designated for interim long term disposal.

### BRIEF DESCRIPTION OF DRAWINGS

The presently disclosed embodiments will be further explained with reference to the attached drawings, wherein like structures are referred to by like numerals throughout the several views. The drawings shown are not necessarily to scale, with emphasis instead generally being placed upon illustrating the principles of the presently disclosed embodiments.
FIGS. 1 and 2 illustrates an embodiment of a fluid treatment system of the present disclosure.
FIG. 3 illustrates an embodiment of a shielded module for use in a fluid treatment system of the present disclosure.
FIG. 4 illustrates an embodiment of a fluid treatment system of the present disclosure.

While the above-identified drawings set forth presently disclosed embodiments, other embodiments are also contemplated, as noted in the discussion. This disclosure presents illustrative embodiments by way of representation and not limitation. Numerous other modifications can be devised by those skilled in the art.

### DETAILED DESCRIPTION

Fluid treatment systems (FTS) and components for such systems are disclosed herein. In an embodiment, the FTS of the present disclosure can be utilized to treat radioactive contaminated fluids. In one embodiment, the FTS of the present disclosure is a single train system that can act as an emergency measure and can treat about 185,000 m³ of wastewater over an approximately 1 year period. The FTS of the present disclosure can also interface with upstream pre-treatment and downstream post-treatment equipment.

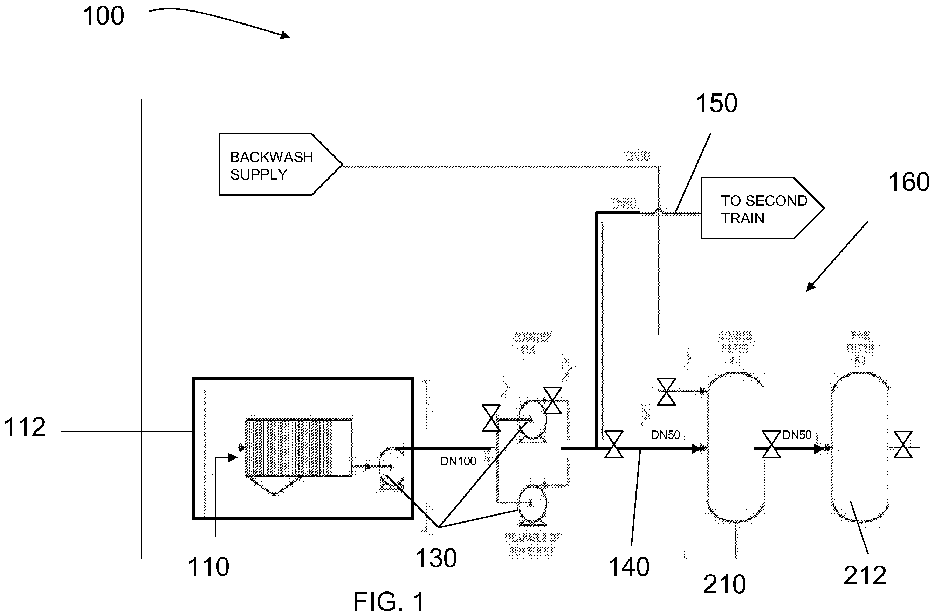

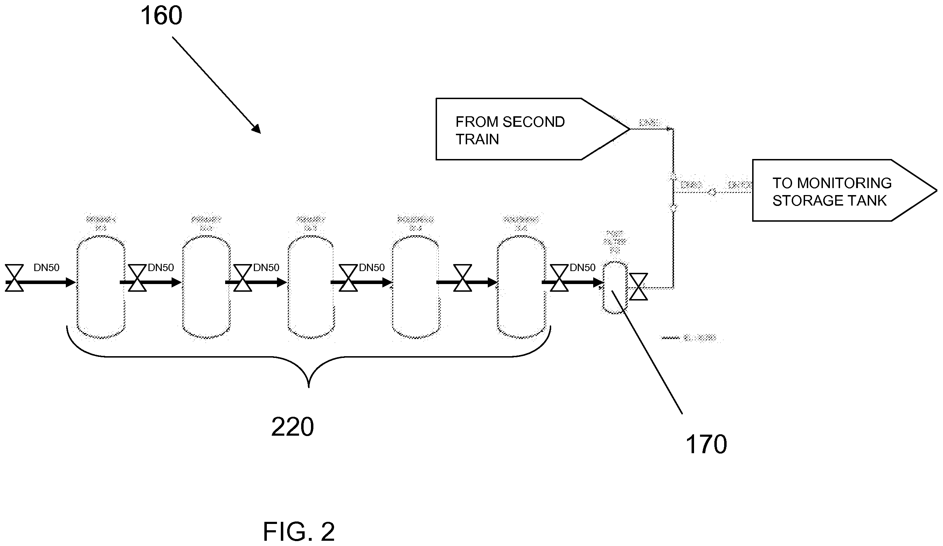

FIG. 1 and FIG. 2 illustrate an embodiment of the FTS 100 of the present disclosure. As illustrated, the FTS 100 may include a source tank 110 for storing contaminated fluid. In an embodiment, the contaminated fluid may be a waste water stream generated from cooling the core(s) of a nuclear reactor(s). Such waste water, in an embodiment, may include radioactive cesium, or one or more other radioactive elements. It should be noted that although FTS 100 is illustrated with contaminated fluid supplied from the source tank 110, the contaminated fluid may be supplied to the FTS 100 directly from the source of contamination. In an embodiment, the tank 110 may be surrounded by a tank shield 112 to minimize emissions from radioactive elements from within the tank 110. In an embodiment, utilizing commercially sized demineralizer vessels for the medium would permit a flow rate between about 10 m³/hr to about 25 m³/hr, with about 20 m³/hr being the nominal flow rate (other flow rates are possible by scaling the vessel's cross-sectional area) based on flow distribution and pressure drops within the ion exchanger. In an embodiment, the waste water characterization can be as noted in Table 1 below.

| **Table 1: Waste Water Characterization** | | |
|---|---|---|
| **Parameter** | **Maximum Value** | **Expected Range** |
| Cesium Activity (Cs-134 & Cs-137) | 5E+06 Bq/cc | 5E+04 Bq/cc - 5E+06 Bq/cc |
| Chloride | 18,000 ppm | 100 ppm - 18,000 ppm |
| Total Dissolved Solids | 35,000 ppm | 200 ppm - 35,000 ppm |
| pH | 7.5 | 5-10 |
| Total Suspended Solids | < 5 ppm | 0 ppm - 5 ppm * |
| Oil & Grease (Floating) | < 5 ppm | 0 ppm - 5 ppm * |
| * If concentrations greater than 5 ppm are expected then pretreatment is desirable to limit the requirement for backflushing of the prefilters. | | |

The FTS 100 may further include one or more pumps 130. In an embodiment, 2 redundant pumps in parallel are used. If the coolant is at atmospheric pressure, a booster pump may be utilized to provide the required head to process the fluid through the FTS. A low flow chemical feed for the control of biological and bacterial growth may be injected into the booster pump suction for mixing. The addition of this agent can prevent contamination of the coolant because the contaminated fluid may have been stagnate for long times prior to processing. The pumps 130 in one embodiment are designed to ensure a desired flow rate of the contaminated fluid through the FTS 100. In an embodiment, the flow rate can be set by limitations in the upstream or downstream systems and by the maximum pressure allowed in the FTS pressure vessel design.

The FTS 100 may also include one or more parallel trains 140, 150 of shielded modules 160 for holding treatment medium, such that when the contaminated stream is passed through the shielded modules 160, the contaminants (both dissolved and suspended) in the contaminated stream are removed by the treatment medium. The shielded module may be, in an embodiment, single-use disposable models. As noted above, the contaminated liquid may be a waste water stream generated from cooling nuclear reactor cores. Because the FTS 100 of the present disclosure can operate in a highly radioactive environment, the FTS 100 of the present disclosure may include various features not found in conventional systems in order to eliminate, or at least minimize, the potential for operational malfunction and need for maintenance. To that effect, in an embodiment, each individual shielded module 160 for holding treatment medium may be individually shielded and disposable to minimize the exposure to personnel during operation, removal or storage of the containers, as is described in detail below. Another benefit of such design is that it avoids a second contaminated stream requiring processing. In particular, the FTS 100 of the present disclosure may utilize treatment medium such as ion exchange medium to remove the contaminants from the contaminated fluid, the contaminants may be absorbed by the ion exchange medium. Because the contaminated ion exchange medium can be stored inside the vessels, the contaminated ion exchange medium does not need to be processed. In contrast, conventional systems utilize precipitation and filtration means to clean the contaminated fluid, which results in a secondary contaminated waste stream, i.e. contaminated precipitate and/or filters, that is radioactive and thus needs to be further processed.

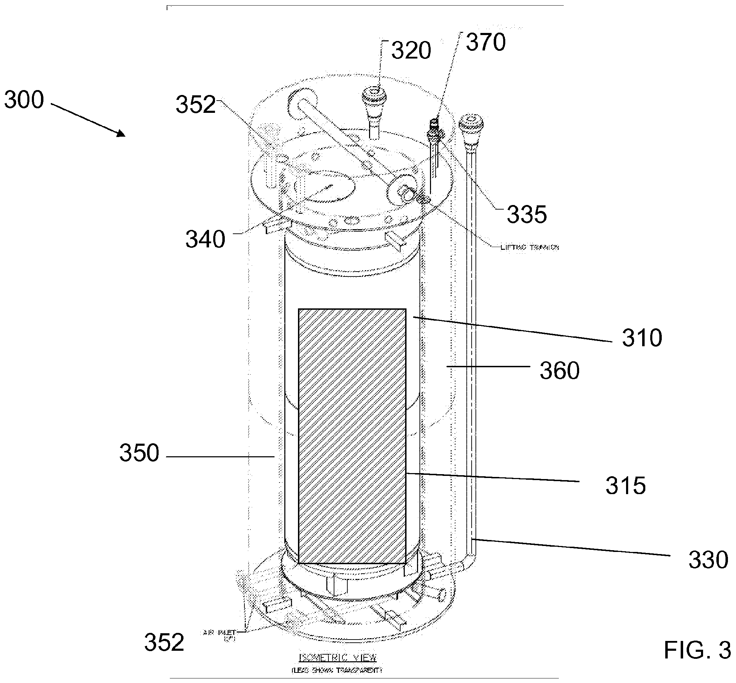

FIG. 3 illustrates an embodiment shielded module 300 suitable for use with FTS of the present disclosure. In one embodiment, the pressure vessel 310 may be sufficiently designed for holding treatment medium 315 to remove radioactive contaminants, such as, for example, suspended, dissolved or emulsified organics or radioactive materials, elements and particulates from the contaminated fluid as the contaminated fluid is passed though the shielded module 300. In an embodiment, the pressure vessel may be constructed according to the ASME VIII requirements. In an embodiment, the pressure vessel may be constructed to withstand pressure of up to about 150 psig and temperature of up to about 600° F.

The shielded module 300 may include an inner pressure vessel 310 having an inlet piping 320 and an outlet piping 330. The inlet piping 320 and the outlet piping 330 are removably attached to the shielded module 300 to facilitate easy transportation and storage of the shielded modules 330. In an embodiment, the inlet piping 320 and an outlet piping 330 are attached to the shielded modules 300 via sealable openings or valves, such as those known in the art, to prevent leakage of contaminated fluid or treatment medium from the shielded modules 330 during the transportation and storage of the shielded modules 360. In an embodiment, the inlet piping 320 and the outlet piping 330 are designed to minimize operator exposure to radioactive elements during vessel change-out activities.

In an embodiment, the treatment medium may include a filter medium. One purpose of the filter medium is to reduce suspended solids in the contaminated fluid. To that end, the filter medium can be a coarse filter, a fine filter, or a combination thereof, so long as it can remove the intended solids within the fluids being treated. In an embodiment, the filter module can be equipped with a backwashing line 370 to remove or wash the suspended solids and fluids from the filter. By doing so, the backwashing of the filters can enhance the life of the filter without requiring medium replacement. It should be appreciated that backwash fluid, in one embodiment, can be routed back to the source tank 110 for further treatment. By way of a non-limiting example, the filter medium can include graded sand combined with other graded inorganic filtration medium such as the natural zeolite, clinoptilolite, or anthracite. The selection of the other filter medium used in the shielded module 300 is based on particle size ranges and density compared to sand so that during the backwash operation when the mediums are partially fluidized to remove the particles and fluids collected during operation, the filter layers will reform upon discontinuation of the upflowing wash water. As the filtration vessels are expected to remain in operation for many cycles and potentially for the entire campaign, low absorption capability of radioactivity is a necessary characteristic of the medium.

The treatment medium can also include, in an embodiment, an ion exchange medium. In an embodiment, the ion exchange medium may be sufficiently designed to remove radioactive cesium or other radioactive elements or other ionic radioactive contaminants from the contaminated fluid. In an embodiment, the ion exchange medium is selected for its ability to remove cesium, strontium, lanthanides, actinides, or combinations thereof. In an embodiment, the medium can be selected to remove radioactive contaminants in the presence of various concentrations, either high or low, of ionic salts. The ion exchange medium can be, but are not limited to, UOP IE-96, UOP IE-911, Clinoptilolite, SrTreat or Termoxid-35 (a double phase system consisting of the highly dispersed amorphous phase of the zirconium hydroxide (as a carrier) and the microcrystalline phase of mixed nickel ferrocyanide located in zirconium hydroxide pores), depending on the contaminated fluid's ionic strength, the contaminant to be removed and the pH.

To load the treatment medium into the pressure vessel 310, the pressure vessel 310 can be provided with a loading opening 340. In an embodiment, the loading opening 340 can be designed such that the pressure vessel 310 can be inspected through the medium loading opening 340. In an embodiment, the pressure vessel 310 may include a vent pipe 335 which is connected to a pressure relief valve during operation to ensure that the pressure inside the pressure vessel 310 remains below a desired limit. The set-point and capacity of the pressure relief valve can be set depending on the vessel design and system operating pressures and flows.

The shielded module 300 may also include an outer shield vessel 360 around the pressure vessel 310. Because as noted above, in an embodiment, the shielded module 300 can be used to treat fluid contaminated with radioactive elements, the shield vessel 360 may be sufficiently designed to decrease radiation exposure rates at the outer surface of the shielded module 300. In other words, the shield vessel 360 may be designed to attenuate the radiation from the radioactive contaminants accumulated by the treatment medium in the pressure vessel. In an embodiment, the shield vessel 360 may also be designed to facilitate ease of handling and storage of the module together with the contaminated treatment medium In an embodiment, the shield vessel 360 may be provided with integral lifting trunnions to facilitate ease of handling and storage. In an embodiment, the shield vessel 360 may be equipped with quick disconnect fittings with drip proof design to reduce spread of contamination and which may be located within reach of operators without need for additional scaffolding.

The design of the shield vessel 360, in particular the material and wall thickness, will depend on the shielding requirements as defined by allowable operator exposure and the strength of the source of radiation. In an embodiment, the shield material may be made up of lead shot encased in steel plates. By way of a non-limiting example, about 7" to 10" of lead shot depending on location may be encased on about 1" of steel plate. In an embodiment, the minimum density of the lead shot may be about 6.8 gm/cc. The construction of the shield vessel 360 may support the fluid pressure of flowable shielding media and the handling or transport loads within conservative stress and deformation may be allowable. In addition, to bulk shielding requirements the thickness of shielding may be designed to accommodate process and cooling pipe routing configurations. The characteristics of the shield vessel 360 casing are defined by its service requirements such as corrosion resistance, structural strength and transportation requirements, such as a vertical drop limit. The characteristics of the shield medium is defined by the radiation source strength and weight restrictions. Suitable materials for forming the shielding include, but are not limited to, lead, tungsten, steel or combinations thereof.

In an embodiment, the shield vessel 360 may include a space between the walls of the shield vessel into which a shielding layer may be placed. In an embodiment, the shielding layer may be formed using a flowable radiation absorption material. In an embodiment, the shield vessel 360 may is designed as to maintain dose rates at the shield surface ALARA, compatible with operator access to make or break quick disconnect fittings and attach or release handling rigging without additional temporary shielding and or remote actuation equipment. Suitable flowable radiation absorption material include, but are not limited, to lead, tungsten, or steel shot, depending on the shielding requirements and the source strength. In an embodiment, the flowable material may be capable of flowing around obstructions and eliminating voids to minimize gaps in the shielding layer. In an embodiment, if the flowable material is soft as is lead, the potential for compression in the lower end of the vertical side walls of the shield vessel 360 exists due to the weight of the column above and the elevated temperatures in the lead due to decay heat generation. To compensate for this, the shielding layer may include a support matrix for structural support. Such stabilizing material can be added after sections of lead are in place so that the lead is not displaced and gaps formed in shielding. In an embodiment, the matrix material may be capable of withstanding high temperature or radiation without undergoing deformation or degradation. In an embodiment, a dry "fine" grade of sand or other small granular material can be used to fill the interstitial spaces and stabilize the lead structure.

In an embodiment, a lead shot may be used to form the shielding layer. Shot can be used to ensure that the shielding material flows around any piping passing through or any obstructions in the shield vessel 360 such that there are no gaps in the shielding. As lead is a soft, low temperature melting point material, the potential for compression in the lower end of the vertical side walls of the shield vessel 360 exists due to the weight of the column above and the elevated temperatures in the lead due to decay heat generation. To compensate for this, a dry "fine" grade of sand or other small granular material can be used to fill the interstitial spaces and stabilize the lead structure. Such stabilizing material can be added after sections of lead are in place so that the lead is not displaced and gaps formed in shielding.

The shielded module 300 further can include an annular gap region 350 between the pressure vessel 310 and the shield vessel 360. The annular gap 350 may be designed to allow a cooling medium to flow through the annular gap 350 for removing heat produced in the pressure vessel 310 generated by the decay heat of the radiological contaminants collected in the pressure vessel. In this manner, the maximum temperatures in the treatment and shielding material may be reduced. In an embodiment, the cooling medium in the annular gap is air and can remove about 40% of the heat generated by the treatment of contaminated fluid with the fluid treatment medium, such as, for example, through a natural convection process. In an embodiment, the annular gap region 350 includes a plurality of cooling medium pipes 352, open to the environment and extending through the shield vessel 360 into the annular gap 350. In an embodiment, a plurality of cooling medium pipes 352 may extend through both the top and bottom of the shield vessel 360 into the annular gap 350 and exit to the environment for natural or passive circulation of air through the annular gap. In an embodiment, the cooling medium pipes 352 may be connected to a pump for pumping a cooling medium through the annular gap 350. In an embodiment, the cooling medium pipes 352 extending through the top of the shield vessel 360 are not connected to the cooling medium pipes 352 extending through the bottom of the shield vessel 360, such that all pipes open into the annular gap 350.

In an embodiment, the cooling medium pipes 352 are shaped or routed (with several bends) through the top and bottom shields of the shield vessel 360 such that the operator exposure during vessel change-out activities (resulting from radiation streaming through the interface of the cooling pipes with the shield), is minimal. In an embodiment, to further limit operator exposure during vessel change-out activities, the cooling medium pipes 352 are located in close proximity to one another, and away from the inlet, outlet, vent and backwash piping (i.e., 320, 330, 335 and 370) where the operator has to perform valve re-alignment functions. It should be noted that any other methods for allowing a cooling medium to flow through the annular gap 350 may be utilized as well as any other methods of removing heat produced in the pressure vessel 310 generated by the decay heat of the radiological contaminants collected in the pressure vessel.

To the extent that measurement of surface dose radiation is desirable, the shielded module 300 can be equipped with one or more radiation sensors. One function of these sensors is personnel protection, i.e., to provide the operator an indication of the radiation levels immediately adjacent to the shielded module. In addition, high surface dose rates on a shielded module holding a filter can provide indication that the filters may need to be backwashed or that the post filter cartridge requires replacement. High surface dose rates on a shielded module holding ion exchange medium can indicate that the ion exchange medium has reached a high activity loading and that the operator should evaluate the need to take the shielded module out of service.

Referring back to FIG. 2, the FTS system 100 may also include a post-filter 170 downstream of the shielded modules. After processing, the treated stream can be transferred to a monitoring storage tank (not shown) through the post-filter 170 to remove any small fines that may have migrated through the upstream ion exchange beds. In contrast, the contaminated fluid from system sampling, filter backwashing, and the drain/vent portions of the FTS can be directed to the source tank.

In operation, as shown in FIG. 1 and FIG. 2, a FTS 100 of the present disclosure can include one or more shielded modules 300 with filter medium, referred herein to as filter modules 210, 212. In an embodiment, the FTS 110 of the present disclosure can include two filter modules 210. In an embodiment, the lead filter module 210 may include a coarse filter medium and the following filter module 212 may include a finer filter medium. As noted above, the main purpose of a filter module is to reduce suspended solids and oils in the contaminated fluid. In an embodiment, the filter modules 210 and 212 may be configured to enable backwashing of the filters inside the shielded module. Backwashing of the filters facilitates long service life without medium replacement. Routing the backwash fluid back to the source tank maintains the concept of simplicity in the process.

The FTS of the present disclosure can further include one or more shielded modules with ion exchange medium, referred herein to as ion exchange modules 220. In an embodiment, the FTS of the present disclosure can include five ion exchange modules. In an embodiment, the first three ion exchange modules (in the direction of the flow of the contaminated fluid) will operate as "primary" ion exchange modules (a lead, middle, and lag), and the remaining two ion exchange modules will operate as "polishing" ion exchange modules (a lead and a lag). In an embodiment, when the lead primary ion exchange module is removed from service, the middle primary ion exchange module takes the primary position relative to the feed stream, promoting the lag to the middle, and adding a fresh ion exchange module in the lag position. Similarly, when the lead polishing ion exchange module is removed from service, the lag polishing ion exchange module takes the primary position, and a fresh ion exchange module is added in the lag polishing position.

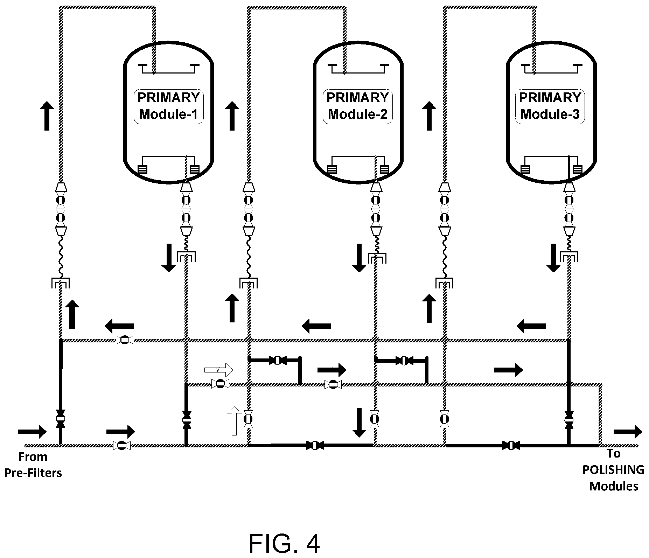

In an embodiment, the rearrangement of ion exchange modules can be achieved by valve alignments and does not require physical relocation of the modules. In reference to FIG. 4, the arrangement may be: Primary Module-2 in the lead position, Primary Module-3 in the middle position, and Primary Module-1 for the lag position. As noted above, each of the modules can include one or more vessels, independent of other modules. Fluid from the pre-filters can enter the fluid inlet header at the valve rack and, for this embodiment, bypass the Primary Module-1 inlet, flow to the inlet of Primary Module-2 and then enter the top of the vessel and through the flow distributors, through the medium and exit through collection screens at the bottom of the Primary Module-2 before returning to the inlet header. The process fluid can then pass through Primary Module-3 and return to Primary Module-1 using a single purpose bypass return line. After passage through Primary Module-1, the cleaned effluent can pass into the primary discharge line and enter the polisher skids. The polishing skid is similar to that for the primary ion exchangers. In an embodiment, the polishing skid consists of only two Polishing Modules. The flow path of the fluid and thus position of each primary module, can be altered via valve alignments.

In an embodiment, the ion exchange modules may be removed from service based on accumulated radioactive activity. Composite samples can be collected at the inlet and outlet of each ion exchange module. This daily sampling in combination with an inline gamma detector can quantify the amount of radioactive elements entering and exiting each ion exchange module, and provide the means to measure the activity in each module. A third check on the cesium inventory can be made through the use of radiation detectors mounted directly on the modules using a magnetic shield to monitor the external radiation dose rate. The use of multiple detectors can provide an indication of the absorption profile in the vessel as well as an indication of stratification of activity that would lead to localized hot spots of radiation. This stratification can be an artifact of the high selectivity of the absorption medium in the specific contaminated stream. Once removed from service and flushed, the ion exchange modules can be drained and transported to interim storage. This interim storage period could be a few or many years. In some embodiments, the interim storage period could be as long as 10 years prior to when the ion exchange resin or exchange medium can be removed and vitrified for ultimate disposal. In some embodiments, after the interim storage period, further actions may be performed wherein the ion exchange module can be overpacked or the ion exchange medium can be removed from the module and processed for ultimate disposal. In an embodiment, after the flushing process is complete, the water in the module can be partially drained to a level approximately equal to that of the ion exchange medium, and activity stratification eliminated by the use of an air sparging process that introduces air from the bottom of the vessel via the outlet piping 330. The sparging flow may be less than 1 cfm per outlet distributor at the bottom of the vessel in order to minimize entrainment of liquid and fines in the air vented from the top of the vessel. Commercial de-entrainment devices can be added to the vent outlet point inside the vessel. Utilization of the sparging / medium mixing process may promote an approximately homogeneous distribution of radioactivity throughout the medium, resulting in lowering of the contact dose rate on the surface of the used ion exchange modules.

As noted above, the FTS 100 may be designed to avoid generation of a secondary contaminated waste stream that requires further processing. To that end, in an embodiment, the contaminated fluid to be cleaned by the FTS contains minimal amount of oils, such that the oil does not need to be removed from the contaminated fluid. However, to the extent it is necessary or desirable to remove oils from the contaminated fluid, the removal of oils can be achieved by a variety of known means. By way of a non-limiting example, the oils can be removed from the contaminated stream by a separator, which may also assist in the removal of sludge, large particulates or both from the contaminated fluid. It should be noted however that utilizing the separator may result in creation of a secondary contaminated stream, i.e. contaminated oils, sludge etc., and thus the separator, if used, may need to be placed inside a shield enclosure.

Once the shielded module 300 is disconnected from service, the contained radioactivity may cause hydrogen generation due to breakdown of the residual water left in the pressure vessel 310. In an embodiment, the vent 335 and the inlet piping 320 can be fitted with filters and left open to allow hydrogen to escape from the module. In an embodiment, in the short term (between couple of days to a week after vessel disconnect), a blower may be utilized to facilitate the hydrogen venting process. In the long term, natural convection resulting from decay heat generation is sufficient to remove the generated hydrogen and water vapor or steam until all of the residual water in the pressure vessel has been removed at which time hydrogen generation is no longer an issue.

In an embodiment, as described above, the shielded modules can be cooled during storage by removing heat produced in the interior container 310 generated by the decay heat of the radiological contaminants collected in the treatment medium. In an embodiment, a cooling medium may be passed though the annular gap between the pressure vessel 310 and the shield vessel 360 to remove the decay heat. In an embodiment, the cooling medium is outside air allowed to flow through the annular gap 350 via the cooling medium pipes 352 due to the effect of natural convection and convection from the surface of the shielded module.

In an embodiment, there can be three primary criteria for determining when to backwash a filtration module: 1) increasing differential pressure across the module indicating accumulation of material on the medium, 2) dose rate at the surface of the module and 3) convenience when the system is not operating for another reason such as ion exchange vessel change-out. If after backwashing the differential pressure has not been sufficiently reduced (indicating permanent fouling of the filtration medium) or the maximum module surface dose rate has not been reduced (indicating an absorption of the radioactive species in the medium itself), replacement of the filtration modules may be desired and for the case of replacement on external dose rate, replacement of the module with one containing a medium with a lesser capability of absorbing radioactivity.

In an embodiment, the FTS 100 of the present disclosure includes one or more of the following features: 1) modular process vessels with integrated shielding for the purpose of single-use application; vessel retirement based on operational characteristics (ion-exchange media depletion, radioactivity loading, decay heat rate, etc.); 2) selective ion exchange focused on the removal of cesium isotopes; multiple media types in combination to accommodate varying levels of sea water contamination; 3) minimized complexity of mechanical design and process controls through emphases on operator functions over automation; minimizing potential of mechanical malfunction and attendant maintenance in high radiation area; 4) passive decay heat removal of self-shielded modules in interim storage configuration; 5) hydrogen purging of self-shielded modules throughout storage: active venting supplanted by passive natural convection; 6) ion exchange resin selective chosen to remove various radionuclides such as cesium, strontium or actinides.

In an embodiment, the shielded modules 300 of the present disclosure may include one or more characteristics: 1) the shielded modules may be disposable or single use; 2) the shielded modules may be used for either filtration or selective ion-exchange; 3) the shielded modules may be used individually or in series for effective / efficient processing; 4) the shielded modules may include means for passive heat removal of decay heat for long-term storage; 5) the shielded modules may include a ventilation gap between the pressure vessel and shield vessel provided to remove heat by natural convection to lower maximum temperatures in shielding material to prevent softening; 6) the shielded modules may include a shielding layer formed from a flowable shielding material (such as lead, tungsten or steel spheres) to eliminate gaps in shielding due to piping or obstructions; 7) the shielding layer of the shielded modules may include a fine inert granular material such as sand can be flowed into shield vessel to provide structural support for shielding media; 8) the shielded modules may include means for venting hydrogen generated by radiolytic processes such as two vents for convective flow (only one required when steam inerted or water no longer present); and 9) the shielded modules may have shutoff and isolation valves as the only movable components of the module.

## Claims

1. A module (300) for treatment of a fluid comprising:
an inner pressure vessel (310) designed to accommodate a treatment medium (315), the treatment medium being selected to remove radioactive contaminants from a fluid passed through the pressure vessel;
an outer shield vessel (360) surrounding the pressure vessel (310) and designed to attenuate the radiation from the radioactive contaminants accumulated by the treatment medium in the pressure vessel and to facilitate ease of handling and storage of the module together with the contaminated treatment medium; and
an annular region (350) between the pressure vessel (310) and the shield vessel (360) for passing a cooling medium therethrough to remove decay heat from the radioactive contaminants accumulated in the pressure vessel,
**characterised in that** the treatment medium selected to remove radioactive contaminants from the contaminated fluid is an ion exchange medium.

2. The module of claim 1 further comprising a vent (335) in fluid communication with the pressure vessel (310) to allow venting of the pressure chamber,
optionally wherein the vent (335) allows to vent hydrogen or water vapor resulting from radiolysis of water and decay heat during storage of the module together with the contaminated treatment medium.

3. The module of claim 1, wherein the pressure vessel, annular gap and the shield vessel are integral to one another, thereby forming a single module.

4. The module of claim 1, wherein the ion exchange medium is selected to remove radioactive contaminants from the contaminated fluid through ion exchange in the presence of various concentrations of ionic salts such as sea salt.

5. The module of claim 1, wherein the treatment medium is selected such that it provides deep bed filtration designed to remove suspended solids from the contaminated fluid.

6. The module of claim 1 further comprising a plurality of pipes (352) routed through the shield vessel into the annular region such that a cooling medium is passable through the pipes into and out of the annular region,
optionally wherein the plurality of pipes are designed as to allow air to circulate through the annular region due to natural or forced convection.

7. The module of claim 1 wherein the shield vessel includes a shielding layer formed using a flowable radiation absorption material, optionally:
wherein the flowable radiation absorption material is capable of flowing around obstructions and eliminating voids to minimize gaps in the shielding layer; and/or
the shielding layer is formed from one of lead shot, tungsten shot or steel shot; and/or
wherein the shielding layer includes a support matrix material for structural support of the shielding layer.

8. A system (100) for treatment of a fluid comprising:
a plurality of modules (300) of claim 1 in fluid communication with one another to allow flow of the contaminated fluid through the modules to remove radioactive contaminants from the contaminated fluid,

9. The system of claim 8, further comprising at least one of the following:
wherein the system effects the removal of particulates or suspended material and selected ionic radioactive contaminants from the contaminated fluid; or
further comprising a plurality of valves arranged to control the flow of the contaminated fluid between the plurality of modules.

10. The system of claim 8 comprising at least one module where the treatment medium is a filter medium,
optionally further comprising a plurality of valves arranged to route the flow of the contaminated fluid between the plurality of modules including ion exchange medium depending on the unused capacity of the ion exchange medium in the individual modules.

11. A method for treatment of radioactively contaminated fluid comprising:
directing a flow of a radioactively contaminated fluid through at least one module (300) having an inner pressure vessel (310) for accommodating a treatment medium (315) comprising an ion exchange medium, an outer shield vessel (360) surrounding the inner pressure vessel (310) and an annular region (350) between the pressure vessel (310) and the shield vessel (360) for passing a cooling medium therethrough to remove decay heat from the radioactive contaminants accumulated in the inner pressure vessel;
capturing radioactive contaminants from the contaminated fluid by the treatment medium (315) accommodated in the inner pressure vessel (310);
determining when the treatment medium (315) in a module of the at least one module (300) needs to be replaced;
removing the module from the flow; and
storing the module in an area designated for interim long term disposal.

12. The method of claim 11 further comprising a step of draining water from the inner pressure vessel before storing the module.

13. The method of claim 11 further comprising a step of venting hydrogen or water vapor from the pressure vessel,
optionally wherein the venting of hydrogen or water vapor is achieved by active venting followed by passive venting.

14. The method of claim 11 further comprising a step of allowing a cooling medium to flow through the annular gap between the pressure vessel and the shield vessel to remove decay heat generated in the pressure vessel and lower the temperature of the shielding material,
optionally wherein the cooling medium is coolant flowing through the annular gap due to natural convection.

15. The method of claim 11 further comprising a step of altering the flow of the contaminated fluid based on the unused capacity of the treatment medium in individual modules of the at least one module.

## Patentansprüche

1. Modul (300) zur Behandlung eines Fluids, umfassend:
einen inneren Druckbehälter (310), der ausgelegt ist, um ein Behandlungsmedium (315) aufzunehmen, wobei das Behandlungsmedium ausgewählt ist, um radioaktive Verunreinigungen aus einem durch den Druckbehälter geleiteten Fluid zu entfernen;
einen äußeren Abschirmungsbehälter (360), der den Druckbehälter (310) umgibt und ausgelegt ist, um die Strahlung von den radioaktiven Verunreinigungen, die durch das Behandlungsmedium in dem Druckbehälter angesammelt werden, abzuschwächen und um die einfache Handhabung und Lagerung des Moduls zusammen mit dem verunreinigten Behandlungsmedium zu erleichtern; und
einen ringförmigen Bereich (350) zwischen dem Druckbehälter (310) und dem Abschirmungsbehälter (360) zur Leitung eines Kühlmediums dadurch, um in dem Druckbehälter angesammelte Zerfallswärme von den radioaktiven Verunreinigungen zu entfernen,
**dadurch gekennzeichnet, dass** das Behandlungsmedium, das ausgewählt ist, um radioaktive Verunreinigungen aus dem verunreinigten Fluid zu entfernen, ein Ionenaustauschmedium ist.

2. Modul nach Anspruch 1, das ferner eine Entlüftung (335) umfasst, die in Fluidverbindung mit dem Druckbehälter (310) steht, um das Entlüften der Druckkammer zu ermöglichen,
wobei es die Entlüftung (335) gegebenenfalls ermöglicht, aus Wasserradiolyse und Zerfallswärme resultierenden Wasserstoff oder Wasserdampf zu entlüften, während das Modul zusammen mit dem verunreinigten Behandlungsmedium gelagert wird.

3. Modul nach Anspruch 1, wobei der Druckbehälter, der ringförmige Spalt und der Abschirmungsbehälter miteinander einstückig sind, wodurch ein einziges Modul gebildet wird.

4. Modul nach Anspruch 1, wobei das Ionenaustauschmedium ausgewählt ist, um radioaktive Verunreinigen durch Ionenaustausch in Gegenwart von verschiedenen Konzentrationen von ionischen Salzen, wie etwa Meersalz, aus dem verunreinigten Fluid zu entfernen.

5. Modul nach Anspruch 1, wobei das Behandlungsmedium derart ausgewählt ist, dass es Tiefenfiltration bereitstellt, die ausgelegt ist, um suspendierte Feststoffe aus dem verunreinigten Fluid zu entfernen.

6. Modul nach Anspruch 1, das ferner eine Vielzahl von Rohren (352) umfasst, die derart durch den Abschirmungsbehälter in den ringförmigen Bereich geführt sind, dass ein Kühlmedium durch die Rohre in den und aus dem ringförmigen Bereich geleitet werden kann,
wobei die Vielzahl von Rohren gegebenenfalls ausgelegt ist, um es zu ermöglichen, dass Luft aufgrund von natürlicher oder erzwungener Konvektion durch den ringförmigen Bereich zirkuliert.

7. Modul nach Anspruch 1, wobei der Abschirmungsbehälter eine unter Verwendung eines strömungsfähigen Strahlungsabsorptionsmaterials eine gebildete Abschirmschicht einschließt, wobei gegebenenfalls: das strömungsfähige Strahlungsabsorptionsmaterial um Hindernisse herum strömen und Hohlräume beseitigen kann, um Spalten in der Abschirmschicht zu minimieren; und/oder
die Abschirmschicht aus einem von Bleischrot, Wolframschrot oder Stahlschrot gebildet ist; und/oder
die Abschirmschicht ein Trägermatrixmaterial als Strukturträger der Abschirmschicht einschließt.

8. System (100) zur Behandlung eines Fluids, umfassend:
eine Vielzahl von Modulen (300) nach Anspruch 1, die miteinander in Fluidverbindung stehen, um es dem verunreinigten Fluid zu ermöglichen, durch die Module zu strömen, um radioaktive Verunreinigungen aus dem verunreinigten Fluid zu entfernen.

9. System nach Anspruch 8, das ferner zumindest eines der Folgenden umfasst:
wobei sich das System auf das Entfernen von Teilchen oder suspendiertem Material und ausgewählten ionischen radioaktiven Verunreinigungen aus dem verunreinigten Fluid auswirkt; oder
ferner umfassend eine Vielzahl von Ventilen, die angeordnet ist, um den Strom des verunreinigten Fluids zwischen der Vielzahl von Modulen zu steuern.

10. System nach Anspruch 8, das zumindest ein Modul umfasst, in dem das Behandlungsmedium ein Filtermedium ist,
gegebenenfalls ferner umfassend eine Vielzahl von Ventilen, die angeordnet ist, um den Strom des verunreinigten Fluids, einschließlich des Ionenaustauschmediums, zwischen der Vielzahl von Modulen abhängig von der ungenutzten Kapazität des Ionenaustauschmediums in den einzelnen Modulen zu führen.

11. Verfahren zur Behandlung von radioaktiv verunreinigtem Fluid, umfassend:
Leiten eines Stroms von einem radioaktiv verunreinigten Fluid durch zumindest ein Modul (300), das Folgendes aufweist: einen inneren Druckbehälter (310) zur Aufnahme eines Behandlungsmediums (315), das ein Ionenaustauschmedium umfasst, einen äußeren Abschirmungsbehälter (360), der den inneren Druckbehälter (310) umgibt, und einen ringförmigen Bereich (350) zwischen dem Druckbehälter (310) und dem Abschirmungsbehälter (360) zur Leitung eines Kühlmediums dadurch, um in dem inneren Druckbehälter angesammelte Zerfallswärme von den radioaktiven Verunreinigungen zu entfernen;
Aufnehmen von radioaktiven Verunreinigungen aus dem verunreinigten Fluid durch das Behandlungsmedium (315), das in dem inneren Druckbehälter (310) aufgenommen ist;
Bestimmen, wann das Behandlungsmedium (315) in einem Modul des zumindest einen Moduls (300) ausgetauscht werden muss;
Entfernen des Moduls aus dem Strom; und
Lagern des Moduls in einem für die langfristige Zwischenentsorgung vorgesehenen Bereich.

12. Verfahren nach Anspruch 11, das ferner einen Schritt des Ablassens von Wasser aus dem inneren Druckbehälter vor der Lagerung des Moduls umfasst.

13. Verfahren nach Anspruch 11, das ferner einen Schritt des Entlüftens von Wasserstoff oder Wasserdampf aus dem Druckbehälter umfasst,
wobei das Entlüften von Wasserstoff oder Wasserdampf gegebenenfalls durch aktives Entlüften gefolgt von passivem Entlüften erzielt wird.

14. Verfahren nach Anspruch 11, das ferner einen Schritt des Ermöglichens, dass ein Kühlmedium durch den ringförmigen Spalt zwischen dem Druckbehälter und dem Abschirmungsbehälter strömt, umfasst, um in dem Druckbehälter erzeugte Zerfallswärme zu entfernen und die Temperatur des Abschirmmaterials zu reduzieren,
wobei das Kühlmedium gegebenenfalls Kühlmittel ist, das aufgrund natürlicher Konvektion durch den ringförmigen Spalt strömt.

15. Verfahren nach Anspruch 11, das ferner einen Schritt des Änderns des Stroms des verunreinigten Fluids auf Grundlage der ungenutzten Kapazität des Behandlungsmediums in den einzelnen Modulen des zumindest einen Moduls umfasst.

## Revendications

1. Module (300) de traitement d'un fluide comprenant :
une cuve sous pression interne (310) conçue pour recevoir un milieu de traitement (315), le milieu de traitement étant sélectionné pour éliminer des contaminants radioactifs d'un fluide circulant à travers la cuve sous pression ;
une cuve blindée externe (360) enveloppant la cuve sous pression (310) et conçue pour atténuer la radiation des contaminants radioactifs accumulés par le milieu de traitement dans la cuve sous pression et pour permettre une manipulation et un stockage aisés du module associé au milieu de traitement contaminé ; et
une zone annulaire (350) entre la cuve sous pression (310) et la cuve blindée (360) destinée à faire circuler un milieu de refroidissement à travers celle-ci afin d'éliminer la puissance résiduelle des contaminants radioactifs accumulés dans la cuve sous pression,
**caractérisé en ce que** le milieu de traitement sélectionné pour éliminer les contaminants radioactifs du fluide contaminé est un milieu d'échange d'ions.

2. Module selon la revendication 1, comprenant en outre un évent (335) en communication fluide avec la cuve sous pression (310) pour permettre la ventilation de la chambre sous pression,
en option dans lequel l'évent (335) permet de ventiler l'hydrogène ou la vapeur d'eau résultant de la radiolyse d'eau et la puissance résiduelle pendant le stockage du module associé au milieu de traitement contaminé.

3. Module selon la revendication 1, dans lequel la cuve sous pression, l'interstice annulaire et la cuve blindée sont solidaires les uns avec les autres, formant de la sorte un seul et même module.

4. Module selon la revendication 1, dans lequel le milieu d'échange d'ions est sélectionné pour éliminer les contaminants radioactifs du fluide contaminé par échange d'ions en présence de diverses concentrations de sels ioniques, tels que du sel de mer.

5. Module selon la revendication 1, dans lequel le milieu de traitement est sélectionné de sorte de fournir une filtration en profondeur conçue pour éliminer des solides en suspension du fluide contaminé.

6. Module selon la revendication 1, comprenant en outre une pluralité de tuyaux (352) passant à travers la cuve blindée dans la zone annulaire de sorte qu'un milieu de refroidissement puisse circuler à travers les tuyaux pour entrer et sortir de la zone annulaire,
en option dans lequel la pluralité de tuyaux sont conçus de manière à permettre une circulation d'air à travers la zone annulaire par convection naturelle ou forcée.

7. Module selon la revendication 1, dans lequel la cuve blindée inclut une couche de blindage formée à l'aide d'un matériau d'absorption de radiation à écoulement libre, en option :
dans lequel le matériau d'absorption de radiation à écoulement libre est en mesure de s'écouler autour d'obstructions et d'éliminer des vides pour minimiser des interstices dans la couche de blindage ; et/ou
la couche de blindage est formée de grenaille de plomb, grenaille de tungstène ou grenaille d'acier ; et/ou
dans lequel la couche de blindage inclut un matériau de matrice de support pour le support structurel de la couche de blindage.

8. Système (100) de traitement d'un fluide comprenant :
une pluralité de modules (300) selon la revendication 1 en communication fluide les uns avec les autres pour permettre l'écoulement du fluide contaminé à travers les modules afin d'éliminer des contaminants radioactifs du fluide contaminé.

9. Système selon la revendication 8, comprenant en outre au moins l'un des éléments suivants :
dans lequel le système réalise l'élimination de particules ou matériaux en suspension et de contaminants radioactifs ioniques sélectionnés du fluide contaminé ; ou
comprenant en outre une pluralité de vannes disposées pour commander l'écoulement du fluide contaminé entre la pluralité de modules.

10. Système selon la revendication 8, comprenant au moins un module où le milieu de traitement est un milieu filtrant,
en option comprenant en outre une pluralité de vannes disposées pour faire passer l'écoulement du fluide contaminé entre la pluralité de modules à l'inclusion du milieu d'échange d'ions en fonction de la capacité inutilisée du milieu d'échange d'ions dans les modules individuels.

11. Procédé de traitement d'un fluide contaminé par radioactivité, consistant à :
diriger un écoulement de fluide contaminé par radioactivité à travers au moins un module (300) possédant une cuve sous pression interne (310) destinée à recevoir un milieu de traitement (315) comprenant un milieu d'échange d'ions, une cuve blindée externe (360) enveloppant la cuve sous pression interne (310) et une zone annulaire (350) entre la cuve sous pression (310) et la cuve blindée (360) destinée à faire circuler un milieu de refroidissement à travers celle-ci afin d'éliminer la puissance résiduelle des contaminants radioactifs accumulés dans la cuve sous pression interne ;
capturer des contaminants radioactifs du fluide contaminé par le milieu de traitement (315) reçu dans la cuve sous pression interne (310) ;
déterminer quand le milieu de traitement (315) dans un module du au moins un module (300) a besoin d'être remplacé ;
éliminer le module de l'écoulement ; et
stocker le module dans une zone conçue pour un entreposage à long terme.

12. Procédé selon la revendication 11, comprenant en outre une étape consistant à vidanger l'eau de la cuve sous pression interne avant le stockage du module.

13. Procédé selon la revendication 11, comprenant en outre une étape consistant à ventiler l'hydrogène ou la vapeur d'eau de la cuve sous pression,
en option dans lequel la ventilation d'hydrogène ou de vapeur d'eau est obtenue par ventilation active suivie d'une ventilation passive.

14. Procédé selon la revendication 11, comprenant en outre une étape d'admission d'un milieu de refroidissement à circuler à travers l'interstice annulaire entre la cuve sous pression et la cuve blindée afin d'éliminer la puissance résiduelle générée dans la cuve sous pression et d'abaisser la température du matériau de blindage,
en option dans lequel le milieu de refroidissement est un liquide de refroidissement circulant à travers l'interstice annulaire par convection naturelle.

15. Procédé selon la revendication 11, comprenant en outre une étape de modification de l'écoulement du fluide contaminé sur la base de la capacité inutilisée du milieu de traitement dans des modules individuels de l'au moins un module.
